(19) Europäisches Patentamt
European Patent Office
Office européen des brevets

(11) **EP 2 314 650 B1**

(12) **EUROPEAN PATENT SPECIFICATION**

(45) Date of publication and mention
of the grant of the patent:
**19.06.2013 Bulletin 2013/25**

(51) Int Cl.:
***C09J 7/02*** *(2006.01)*

(21) Application number: **10188297.5**

(22) Date of filing: **21.10.2010**

(54) **Electroconductive pressure-sensitive adhesive tape with separator**

Elektrisch leitendes druckempfindliches Klebeband mit Trennfolienabdeckung

Bande adhésive électro-conductrice sensible à la pression avec film protecteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2009 JP 2009243606**

(43) Date of publication of application:
**27.04.2011 Bulletin 2011/17**

(73) Proprietor: **Nitto Denko Corporation
Ibaraki-shi
Osaka 567-8680 (JP)**

(72) Inventors:
• **Daigaku, Noritsugu
Ibaraki-shi Osaka 567-8680 (JP)**
• **Tamai, Hironori
Ibaraki-shi Osaka 567-8680 (JP)**
• **Buzoujima, Yasushi
Ibaraki-shi Osaka 567-8680 (JP)**

(74) Representative: **Grünecker, Kinkeldey,
Stockmair & Schwanhäusser
Leopoldstrasse 4
80802 München (DE)**

(56) References cited:
**EP-A1- 1 964 900      EP-A1- 2 039 506
EP-A1- 2 087 995      EP-A2- 0 422 919
EP-A2- 0 905 665**

**Description**

[Technical Field]

The present invention relates to an electroconductive pressure-sensitive adhesive tape. More specifically, it relates to an electroconductive pressure-sensitive adhesive tape that is used for, for example, electrically conducting between two positions separated from each other.

[Background Art]

An electroconductive pressure-sensitive adhesive tape is used for, for example, electrically conducting between two positions separated from each other, and shielding electromagnetic wave. Examples of the application of electrically conducting between two positions separated from each other include grounding of a printed circuit board and the like and grounding for static protection. In such applications, a pressure-sensitive-type electroconductive pressure-sensitive adhesive tape is adhered between two required positions, and the electrical conduction between the two positions is ensured by the electrical conduction between the adherend face and a conductive base of the electroconductive pressure-sensitive adhesive tape (electrical conduction in the thickness direction) and the electrical conduction in the surface direction of the conductive base.

Examples of such electroconductive pressure-sensitive adhesive tape include "an electroconductive pressure-sensitive adhesive tape that includes a metal foil and an adhesive layer (pressure-sensitive adhesive layer) provided on one side of the metal foil and in which a conductive part penetrating the pressure-sensitive adhesive layer and having a terminal on the leading end is formed on the pressure-sensitive adhesive layer covering side of the metal foil" (for example, see Patent Documents 1 to 3).

The electroconductive pressure-sensitive adhesive tape commonly has a separator (release liner) on the surface of the pressure-sensitive adhesive layer for protection of the pressure-sensitive adhesive layer and the like until used. However, the surface of the pressure-sensitive adhesive layer in the electroconductive pressure-sensitive adhesive tape has a concave-convex shape because the terminals protrude, and the separator (separator surface) cannot fit the shape. Thus, the adhesive power of the separator may be insufficient with respect to the pressure-sensitive adhesive layer surface (the surface of the pressure-sensitive adhesive layer side). Specifically, partial releasing of the separator from the pressure-sensitive adhesive layer surface, so-called "separator lifting", is caused, and thus the protective properties for the pressure-sensitive adhesive layer may be reduced or the handling properties may be reduced. Such separator lifting tends to be caused especially when the electroconductive pressure-sensitive adhesive tape is wound into a roll shape or when the electroconductive pressure-sensitive adhesive tape has a long length.

[Citation List]

[Patent Literature]

Patent Document 1: Japanese Unexamined Patent Application No. 8-185714.
Patent Document 2: Japanese Unexamined Patent Application No. 10-292155.
Patent Document 3: Japanese Unexamined Patent Application No. 11-302615.

[Summary of Invention]

[Technical Problem]

Therefore, it is an object of the present invention to provide an electroconductive pressure-sensitive adhesive tape that does not cause separator lifting.

[Solution to Problem]

As a result of intensive studies, the present inventors have found that, when the separator included in the electroconductive pressure-sensitive adhesive tape is controlled to have a particular elongation range in the longitudinal direction, the separator lifting is not caused. The present invention has been achieved on the basis of the findings.

That is, the present invention provides an electroconductive pressure-sensitive adhesive tape that includes an electroconductive pressure-sensitive adhesive tape main body having a pressure-sensitive adhesive layer on one side of a metal foil and a terminal formed on the metal foil and penetrating the pressure-sensitive adhesive layer, and a separator provided on a surface of the pressure-sensitive adhesive layer and having an elongation of 600% or more in a longitudinal direction of the separator.

Furthermore, in the electroconductive pressure-sensitive adhesive tape, it is preferable that the separator has a release force of 30 to 1000 mN/50 mm in a 180° release test.

In the electroconductive pressure-sensitive adhesive tape, it is preferable that the separator has a thickness of 15 to 200 μm.

[Advantageous Effects of Invention]

Because the electroconductive pressure-sensitive adhesive tape of the present invention has the constitution described above, the separator lifting is not caused. Accordingly, the electroconductive pressure-sensitive adhesive tape has excellent protective properties for the pressure-sensitive adhesive layer and excellent handling properties. In particular, even when the electroconductive pressure-sensitive adhesive tape is wound (for example, when wound for storage) or has a long length, the separator lifting is not caused, and thus the handling is very easy.

[Brief Description of Drawings]

Fig. 1 is a schematic view (plan view) showing an embodiment of the electroconductive tape main body included in the electroconductive pressure-sensitive adhesive tape of the present invention.
Fig. 2 is a schematic view showing an embodiment of the electroconductive pressure-sensitive adhesive tape of the present invention (cross-sectional view across the terminals).
Fig. 3 is a schematic view showing another embodiment of the electroconductive pressure-sensitive adhesive tape of the present invention (cross-sectional view across the terminals).

[Description of Embodiments]

Hereinafter, the embodiments of the present invention will be described in detail with reference to drawings as necessary.

The electroconductive pressure-sensitive adhesive tape of the present invention includes an electroconductive pressure-sensitive adhesive tape main body that has a pressure-sensitive adhesive layer on one side of a metal foil and a terminal formed on the metal foil and penetrating the pressure-sensitive adhesive layer, and a separator that is present on a surface of the pressure-sensitive adhesive layer and that has an elongation of 600% or more in the longitudinal direction.

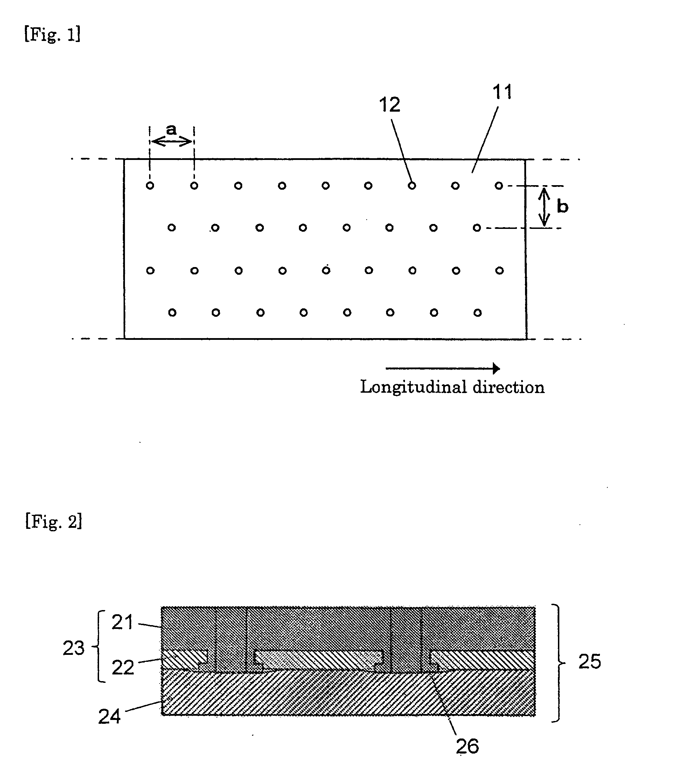

Fig. 2 is a schematic view showing an embodiment of the electroconductive pressure-sensitive adhesive tape of the present invention (cross-sectional view across the terminals). The electroconductive pressure-sensitive adhesive tape 25 is composed of an electroconductive pressure-sensitive adhesive tape main body 23 in which a pressure-sensitive adhesive layer 22 is formed on one side of a metal foil 21, and a separator 24 provided on a surface of the pressure-sensitive adhesive layer 22.

In the present application, an "electroconductive pressure-sensitive adhesive tape" basically includes a "separator". The "residual part after the separator is released from the electroconductive pressure-sensitive adhesive tape" is also referred to as an "electroconductive pressure-sensitive adhesive tape main body". Furthermore, the surface of the pressure-sensitive adhesive layer in the electroconductive pressure-sensitive adhesive tape main body is also referred to as an "adhesive face". In the application, an "electroconductive pressure-sensitive adhesive tape" includes a sheet-shaped tape that is an "electroconductive pressure-sensitive adhesive sheet". In the application, a longitudinal direction (MD) means the manufacturing line direction (machine direction) in a manufacturing process, and in the case of a continuous separator and a continuous pressure-sensitive adhesive tape, it means their length directions.

The electroconductive pressure-sensitive adhesive tape of the present invention is suitably used for, for example, electrically conducting between two positions separated from each other, and shielding electromagnetic wave of electric and electronic equipments and cables. Specifically, for example, it can be used for grounding of a printed circuit board, grounding of an outer shielding case for electronic equipments, grounding for static protection, internal wiring of a power supply device, electronic equipment, and the like.

[Electroconductive Pressure-Sensitive Adhesive Tape Main Body]

The electroconductive pressure-sensitive adhesive tape main body included in the electroconductive pressure-sensitive adhesive tape of the present invention is a residual part after the separator is released from the electroconductive pressure-sensitive adhesive tape of the present invention. Because the separator is usually released when the electroconductive pressure-sensitive adhesive tape of the present invention is used, the "electroconductive pressure-sensitive adhesive tape main body" represents the state of the electroconductive pressure-sensitive adhesive tape when used. The electroconductive pressure-sensitive adhesive tape main body has the constitution that has a pressure-sensitive adhesive layer on one side of a metal foil and a terminal formed on the metal foil and penetrating the pressure-sensitive adhesive layer.

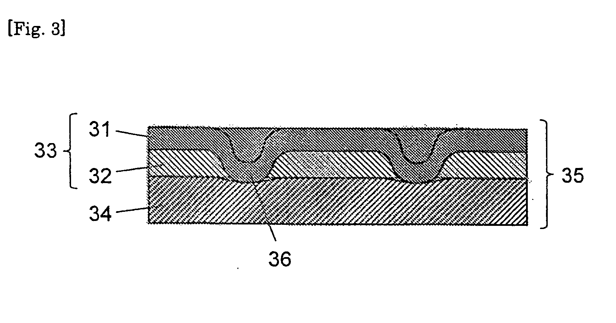

Fig. 1 is a schematic view (plan view viewed from the pressure-sensitive adhesive layer side) showing an embodiment of the electroconductive pressure-sensitive adhesive tape main body included in the electroconductive pressure-sensitive adhesive tape of the present invention. In Fig. 1, 11 represents the electroconductive pressure-sensitive adhesive tape main body, and 12 represents the terminal. The position pattern of the terminals 12 is so-called a pattern of distributed points. For example, as shown in Fig. 1, the electroconductive pressure-sensitive adhesive tape main body capable of being used includes the terminals that are arranged so that lines each having an interval a of the terminals in the longitudinal direction will be aligned to have an interval b while the lines adjacent to each other will be displaced by one-half pitch and that a will be almost the same as b. Fig. 2 is a schematic view showing an embodiment of the electroconductive pressure-sensitive adhesive tape of the present invention (cross-sectional view across the terminals). In the embodiment, the electroconductive pressure-sensitive adhesive tape main body 23 has a pressure-sensitive adhesive layer 22 on one side of a metal foil 21, and a terminal 26 that penetrates the pressure-sensitive adhesive layer 22 is formed on the metal foil 21. Furthermore, Fig. 3 is a schematic view showing another embodiment of the electroconductive pressure-sensitive adhesive tape of the present invention (cross-sectional view across the terminals). In the embodiment, the electroconductive pressure-sensitive adhesive tape main body 33 has a pressure-sensitive adhesive layer 32 on one side of a metal foil 31, and a terminal 36 that penetrates the pressure-sensitive adhesive layer 32 is formed on the metal foil 31 by embossing from the metal foil 31 side. In the electroconductive pressure-sensitive adhesive tape of the present invention, by providing the terminals as illustrated in Fig. 2 and Fig. 3, electrical conductivity is imparted in the thickness direction between the metal foil and the adhesive face of the pressure-sensitive adhesive layer to an adherend. As a result, the electroconductive pressure-sensitive adhesive tape main body provides the electrical conductivity in both the surface direction and the thickness direction.

(Metal Foil)

As the metal foil, any metal foil having self-standing properties and electrical conductivity can be used, and examples of the metal foil include metal foils of copper, aluminum, nickel, silver, iron, lead, and alloys of them. Among them, from the viewpoints of cost and workability, the aluminum foil and the copper foil are preferred. The metal foil may be treated with surface treatment such as tinning. The thickness of the metal foil is not specifically limited and can be selected from a range of about 5 to 500 $\mu$m. From the viewpoint of balance between the strength and the flexibility, it is preferably 8 to 200 $\mu$m, and more preferably 10 to 150 $\mu$m.

(Pressure-Sensitive Adhesive Layer)

The type of pressure-sensitive adhesive for forming the pressure-sensitive adhesive layer is not specifically limited, and examples of the adhesive include known adhesives such as an acrylic pressure-sensitive adhesive, a rubber pressure-sensitive adhesive, a vinyl alkyl ether pressure-sensitive adhesive, a silicone pressure-sensitive adhesive, a polyester pressure-sensitive adhesive, a polyamide pressure-sensitive adhesive, an urethane pressure-sensitive adhesive, a fluorine pressure-sensitive adhesive, and an epoxy pressure-sensitive adhesive. These pressure-sensitive adhesives may be used alone or in combination of two or more of them. The pressure-sensitive adhesive may be in any form. Examples of the form include an active energy ray-curable pressure-sensitive adhesive, a solvent (solution) pressure-sensitive adhesive, an emulsion pressure-sensitive adhesive, and a hot-melt pressure-sensitive adhesive.

Among them, the acrylic pressure-sensitive adhesive is preferred as the pressure-sensitive adhesive for forming the pressure-sensitive adhesive layer. Namely, the pressure-sensitive adhesive layer is preferably an acrylic pressure-sensitive adhesive layer. Furthermore, the acrylic pressure-sensitive adhesive layer is preferably the pressure-sensitive adhesive layer (acrylic pressure-sensitive adhesive layer) that is formed from a pressure-sensitive adhesive composition (acrylic pressure-sensitive adhesive composition) containing an acrylic polymer as the essential component. The pressure-sensitive adhesive composition may include other components (additives) and the like as necessary in addition to the acrylic polymer. The content of the acrylic polymer in the pressure-sensitive adhesive layer (acrylic pressure-sensitive adhesive layer) (100% by weight) is not specifically limited, but preferably 65% by weight or more (for example, 65 to 100% by weight), and more preferably 70 to 99.999% by weight.

The acrylic polymer is preferably composed of an alkyl (meth)acrylate having a linear or branched alkyl group as the essential monomer component. The "(meth)acrylate" means "acrylate" and/or "methacrylate", and other terms are alike.

The monomer component constituting the acrylic polymer may further include a polar group-containing monomer, a multifunctional monomer, and other copolymerizable monomers as copolymerizable monomer components. By using such copolymerizable monomer component, for example, the adhesive strength to an adherend and cohesive power of the pressure-sensitive adhesive layer can be improved. The copolymerizable monomer components may be used alone or in combination of two or more of them.

Examples of the alkyl (meth)acrylate having a linear or branched alkyl group (hereinafter, also simply referred to as "alkyl (meth)acrylate") include alkyl (meth)acrylates having an alkyl group with 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, alkyl (meth)acrylates having an alkyl group with 2 to 10 carbon atoms are preferable, and n-butyl acrylate is more preferable. The alkyl (meth)acrylates may be used alone or in combination of two or more of them.

The content of the alkyl (meth)acrylate is preferably 50 to 100% by weight, and more preferably 60 to 99.9% by weight, on the basis of the total amount (100% by weight) of monomer components constituting the acrylic polymer.

Examples of the polar group-containing monomer include carboxyl group-containing monomers such as (meth)acrylic acid, itaconic acid, maleic acid, fumaric acid, crotonic acid, and isocrotonic acid, and anhydrides of them (for example, maleic anhydride); hydroxyl group-containing monomers including hydroxyalkyl (meth)acrylates such as 2-hydroxylethyl (meth)acrylate, 3-hydroxypropyl (meth)acrylate, 4-hydroxybutyl (meth)acrylate, and 6-hydroxyhexyl (meth)acrylate, as well as vinyl alcohol and allyl alcohol; amide group-containing monomers such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxylethyl acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocycle-containing vinyl monomers such as N-vinyl-2-pyrrolidone, (meth)acryloyl morpholine, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate monomers such as methoxyethyl (meth)acrylate and ethoxyethyl (meth)acrylate; sulfonate group-containing monomers such as sodium vinylsulfonate; phosphate group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. Among the polar group-containing monomers, the carboxyl group-containing monomers are preferable and acrylic acid is more preferable. The polar group-containing monomers may be used alone or in combination of two or more of them.

The content of the polar group-containing monomer is preferably 1 to 30% by weight, and more preferably 3 to 20% by weight, on the basis of the total amount (100% by weight) of monomer components constituting the acrylic polymer. When the content of the polar group-containing monomer is more than 30% by weight, the pressure-sensitive adhesive layer may have excessively high cohesive power to reduce the tackiness. Furthermore, when the content of the polar group-containing monomer is less than 1% by weight, the pressure-sensitive adhesive layer may have reduced cohesive power to reduce the durability.

Examples of the multifunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate.

The content of the multifunctional monomer is preferably 0.5% by weight or less (for example, 0 to 0.5% by weight), and more preferably 0 to 0.3% by weight or less, on the basis of the total amount (100% by weight) of monomer components constituting the acrylic polymer. When the content is more than 0.5% by weight, the pressure-sensitive adhesive layer may have excessively high cohesive power to reduce the tackiness. The multifunctional monomer does not have to be used when a crosslinking agent is used. However, when the crosslinking agent is not used, the content of the multifunctional monomer is preferably 0.001 to 0.5% by weight, and more preferably 0.002 to 0.1% by weight.

Furthermore, examples of the copolymerizable monomer other than the polar group-containing monomer and the multifunctional monomer include (meth)acrylates having an alicyclic hydrocarbon group, such as cyclopentyl (meth)acrylate, cyclohexyl (meth)acrylate, and isobornyl (meth)acrylate; aryl (meth)acrylates such as phenyl (meth)acrylate; vinyl esters such as vinyl acetate and vinyl propionate; aromatic vinyl compounds such as styrene and vinyltoluene; olefins and dienes such as ethylene, butadiene, isoprene, and isobutylene; vinyl ethers such as vinyl alkyl ethers; and vinyl chloride.

The acrylic polymer can be prepared through polymerization of the monomer components by a known or common polymerization method. Examples of the polymerization method of the acrylic polymer include solution polymerization method, emulsion polymerization method, bulk polymerization method, and polymerization method through active energy ray irradiation (active energy ray polymerization method). Among them, from the viewpoints of transparency, water resistance, cost, and the like, the solution polymerization method and the active energy ray polymerization method are preferred, and the solution polymerization method is more preferred.

For the solution polymerization, various common solvents can be used. Examples of such solvent include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used alone or in combination of two or more of them.

A polymerization initiator and the like used in the polymerization of the acrylic polymer is not specifically limited, and can be suitably selected from known or common agents to be used. More specifically, preferred examples of the polymerization initiator include oil-soluble polymerization initiators including azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azo-bis(2-methylbutyronitrile), 1,1'-azobis(cyclohexane-1-carbonitrile), 2,2'-azobis(2,4,4-trimethylpentane), and dimethyl 2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. The polymerization initiators may be used alone or in combination of two or more of them. The amount of the polymerization initiator used is not specifically limited and can be set within a range capable of being used conventionally as the polymerization initiator.

The weight average molecular weight of the acrylic polymer is preferably 300,000 to 1,200,000, more preferably 350,000 to 1,000,000, and even more preferably 400,000 to 900,000. When the acrylic polymer has a weight average molecular weight of less than 300,000, fine tackiness may not be provided. In contrast, when it has a weight average molecular weight of more than 1,200,000, coating properties may have a problem. The weight average molecular weight can be controlled by the type and the used amount of the polymerization initiator, temperature and time during the polymerization, monomer concentration, monomer addition speed, and the like.

The pressure-sensitive adhesive composition for forming the pressure-sensitive adhesive layer constituting the electroconductive pressure-sensitive adhesive tape of the present invention preferably includes a crosslinking agent. When the crosslinking agent is used, the base polymer (for example, acrylic polymer) constituting the pressure-sensitive adhesive layer is crosslinked, and thus the pressure-sensitive adhesive layer obtains further increased cohesive power. The crosslinking agent is not specifically limited, and can be suitably selected from known or common crosslinking agents to be used. Specifically, preferred examples of the crosslinking agent is a multifunctional melamine compound (melamine crosslinking agent), a multifunctional epoxy compound (epoxy crosslinking agent), and a multifunctional isocyanate compound (isocyanate crosslinking agent). Among them, the isocyanate crosslinking agent and the epoxy crosslinking agent are preferable, and the isocyanate crosslinking agent is more preferable. The crosslinking agents may be used alone or as a mixture of two or more of them.

Examples of the isocyanate crosslinking agent include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; aromatic polyisocyanates such as 2,4-tolylene diisocyanate, 2,6-tolylene diisocyanate, 4,4'-diphenylmethane diisocyanate, and xylylene diisocyanate. In addition, a trimethylolpropane/tolylene diisocyanate adduct [supplied by NIPPON POLYURETHANE INDUSTRY CO., LTD. under the trade name "CORONATE L"], a trimethylolpropane/hexamethylene diisocyanate adduct [supplied by NIPPON POLYURETHANE INDUSTRY CO., LTD. under the trade name "CORONATE HL"], and the like may be used.

Examples of the epoxy crosslinking agent include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ethers, polypropylene glycol diglycidyl ethers, sorbitol polyglycidyl ethers, glycerol polyglycidyl ethers, pentaerythritol polyglycidyl ethers, polyglycerol polyglycidyl ethers, sorbitan polyglycidyl ethers, trimethylolpropane polyglycidyl ethers, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and epoxy resins having two or more of epoxy groups in the molecule. As a commercial product, for example, "TETRAD-C (trade name)" supplied by MITSUBISHI GAS CHEMICAL COMPANY, INC. can be used.

The content of the crosslinking agent in the pressure-sensitive adhesive composition is not specifically limited. For example, in the case of the acrylic pressure-sensitive adhesive layer, the content is preferably 0 to 5 parts by weight, and more preferably 0 to 3 parts by weight, on the basis of the total amount (100 parts by weight) of monomer components constituting the acrylic polymer.

The pressure-sensitive adhesive composition preferably includes a tackifier resin (tackifier) from the viewpoint of tackiness improvement. Examples of the tackifier resin include a terpene tackifier resin, a phenol tackifier resin, a rosin tackifier resin, and a petroleum tackifier resin. Among them, the rosin tackifier resin is preferable. These tackifier resins may be used alone or in combination of two or more of them.

Examples of the terpene tackifier resin include terpene resins such as an $\alpha$-pinene polymer, a $\beta$-pinene polymer, and a dipentene polymer, and modified terpene resins (for example, a terpene-phenol resin, a styrene-modified terpene resin, an aromatic-modified terpene resin, and a hydrogenated terpene resin) that are derived from the terpene resins through modification (for example, phenol modification, aromatic modification, hydrogenation modification, and hydrocarbon modification).

Examples of the phenol tackifier resin include condensates of any of phenols (for example, phenol, m-cresol, 3,5-xylenol, p-alkylphenols, and resorcin) and formaldehyde, such as an alkyl-phenol resin and a xylene-formaldehyde resin; resols obtained by addition reaction of any of the phenols and formaldehyde using an alkali catalyst; novolacs obtained by condensation reaction of any of the phenols and formaldehyde using an acid catalyst; and rosin-modified phenol resins obtained by adding phenol to any of rosins (for example, an unmodified rosin, a modified rosin, and various rosin derivatives) using an acid catalyst and thermal polymerizing the adduct.

Examples of the rosin tackifier resin include unmodified rosins (crude rosins) such as gum rosin, wood rosin, and tall oil rosin; modified rosins obtained by modification of any of the unmodified rosins typically through hydrogenation, disproportionation, or polymerization (for example, a hydrogenated rosin, a disproportionated rosin, a polymerized rosin, and other chemically modified rosins); and various rosin derivatives. Examples of the rosin derivative include rosin esters such as a rosin ester compound obtained by esterifying an unmodified rosin with alcohols and a modified rosin ester compound obtained by esterifying a modified rosin such as a hydrogenated rosin, a disproportionated rosin, and a polymerized rosin with an alcohol; unsaturated-fatty-acid-modified rosins obtained by modifying an unmodified rosin or a modified rosin (for example, a hydrogenated rosin, a disproportionated rosin, and a polymerized rosin) with an unsaturated fatty acid; unsaturated-fatty-acid-modified rosin esters obtained by modifying a rosin ester with an unsaturated fatty acid; rosin alcohols obtained by reducing a carboxyl group in an unmodified rosin, a modified rosin (for example, a hydrogenated rosin, a disproportioned rosin, and a polymerized rosin), an unsaturated-fatty-acid modified rosin, and an unsaturated-fatty-acid-modified rosin ester; and metal salts of rosins such as an unmodified rosin, a modified rosin, and various rosin derivatives (specifically, a rosin ester).

Examples of the petroleum tackifier resin include known petroleum resins such as an aromatic petroleum resin, an aliphatic petroleum resin, an alicyclic petroleum resin (aliphatic cyclic petroleum resin), an aliphatic/aromatic petroleum resin, an aliphatic/alicyclic petroleum resin, a hydrogenated petroleum resin, a coumarone resin, and a coumarone-indene resin. Specific examples of the aromatic petroleum resin include a polymer using one or more of vinyl group-containing aromatic hydrocarbons having 8 to 10 carbon atoms (for example, styrene, o-vinyltoluene, m-vinyltoluene, p-vinyltoluene, $\alpha$-methylstyrene, $\beta$-methylstyrene, indene, and methylindene). As the aromatic petroleum resin, aromatic petroleum resins (so-called "C9 petroleum resins") obtained from a fraction including vinyltoluene, indene, and the like (so-called "C9 petroleum fraction") can be suitably used. Furthermore, examples of the aliphatic petroleum resin include a polymer using one or more of olefins and dienes each having 4 to 5 carbon atoms [for example, olefins such as butene-1, isobutylene, and pentene-1; and dienes such as butadiene, piperylene (1,3-pentadiene), and isoprene]. As the aliphatic petroleum resin, aliphatic petroleum resins (for example, so-called "C4 petroleum resins" and "C5 petroleum resins") obtained from a fraction including butadiene, piperylene, isoprene, and the like (for example, so-called "C4 petroleum fraction" and "C5 petroleum fraction") can be suitably used. Examples of the alicyclic petroleum resin include an alicyclic hydrocarbon resin obtained by cyclizing and dimerizing aliphatic petroleum resins (for example, so-called "C4 petroleum resins" and "C5 petroleum resins") and then polymerizing the cyclized and dimerized products, a polymer of a cyclic diene compound (for example, cyclopentadiene, dicyclopentadiene, ethylidene norbornene, dipentene, ethylidene bicycloheptene, vinylcycloheptene, tetrahydroindene, vinylcyclohexene, and limonene) and hydrogenated products of the polymer, and an alicyclic hydrocarbon resin obtained by hydrogenating an aromatic ring in any of the aromatic hydrocarbon resins described above or aliphatic/aromatic petroleum resins described below. Examples of the aliphatic/aromatic petroleum resin include a styrene-olefin copolymer. As the aliphatic/aromatic petroleum resin, so-called "C5/C9 copolymerized petroleum resins" and the like can be used.

Commercially available tackifier resins may be used, and examples of them include "SUMILITERESIN PR-12603 (trade name)" supplied by SUMITOMO BAKELITE Co., Ltd. and "PENSEL D125 (trade name)" supplied by Arakawa Chemical Industries, Ltd.

The content of the tackifier resin in the pressure-sensitive adhesive composition is not specifically limited. For example, in the case of the acrylic pressure-sensitive adhesive layer, the content is preferably 5 to 100 parts by weight, and more preferably 10 to 50 parts by weight, on the basis of the total amount (100 parts by weight) of monomer components constituting the acrylic polymer. When the content is more than 100 parts by weight, improving effect of the tackiness may not be obtained in spite of further addition of the tackifier resin. In contrast, when the content is less than 5 parts by weight, the effect by adding the tackifier may not be obtained.

As necessary, the pressure-sensitive adhesive composition may further contain known additives such as a crosslinking promoter, an age inhibitor, a filler, a colorant (for example, pigment and dye), an ultraviolet absorber, an antioxidant, a chain transfer agent, a plasticizer, a softener, a surfactant, and an antistatic agent, and solvents (for example, the solvents usable for the solution polymerization of the acrylic polymer described above).

The pressure-sensitive adhesive composition can be prepared by mixing an acrylic polymer (or an acrylic polymer solution), a crosslinking agent, a tackifier, a solvent, and other additives.

The thickness of the pressure-sensitive adhesive layer constituting the electroconductive pressure-sensitive adhesive tape of the present invention is not specifically limited, but preferably 10 to 120 $\mu$m, and more preferably 13 to 90 $\mu$m. When the pressure-sensitive adhesive layer has a thickness of more than 120 $\mu$m, it may be difficult to obtain a thin film product or to form the terminal. When the pressure-sensitive adhesive layer has a thickness of less than 10 $\mu$m, the stress cannot be distributed because of the thin pressure-sensitive adhesive layer, and thus exfoliation may be readily caused.

The method for forming the pressure-sensitive adhesive layer is not specifically limited, and examples of the method include a method in which the pressure-sensitive adhesive composition above-described is coated on a metal foil, and dried and/or cured as necessary.

For the coating in the method for forming the pressure-sensitive adhesive layer, a known coating method can be used with a common coater such as a gravure roll coater, a reverse roll coater, a kiss roll coater, a dip roll coater, a bar coater, a knife coater, a spray coater, a comma coater, and a direct coater.

The electroconductive pressure-sensitive adhesive tape main body constituting the electroconductive pressure-sensitive adhesive tape of the present invention may further include other layers (for example, an inner layer and an under coating layer) than the metal foil and the pressure-sensitive adhesive layer as long as the effect of the invention is not impaired.

The thickness of the electroconductive pressure-sensitive adhesive tape main body constituting the electroconductive pressure-sensitive adhesive tape of the present invention is not specifically limited, but preferably 25 to 200 $\mu$m, and more preferably 40 to 140 $\mu$m. When the thickness is more than 200 $\mu$m, it may be difficult to obtain a thin film product, and when the thickness is less than 25 $\mu$m, the workability may be reduced. The "thickness of electroconductive pressure-sensitive adhesive tape main body" means the thickness from the metal foil surface to the adhesive face.

The electroconductive pressure-sensitive adhesive tape main body is not specifically limited, but can be produced by the following procedure: first, a pressure-sensitive adhesive layer is formed on one side of a metal foil; and then, multiple points of the metal foil are drawn to the surface of the pressure-sensitive adhesive layer by bottomless draw forming to make terminals. Specifically, it can be produced, for example, by methods described in Japanese Examined Utility Model Application No. 63-46980 and Japanese Unexamined Patent Application No. 8-185714. An example of the producing method will be described with reference to Fig. 2. First, a coating solution (pressure-sensitive adhesive composition) containing the acrylic polymer and, as necessary, a solvent, a crosslinking agent, a tackifier resin, and other additives is coated on a surface of a metal foil 21 so as to have a desired thickness, and then dried and/or cured to form a pressure-sensitive adhesive layer 22. Then, the metal foil 21 is drawn (draw-formed) using a male punch and a female die to form a bottomless cylinder shape. Next, the leading end of the cylinder-shaped part is horizontally bent to the outside by pressing to form a flange-shaped terminal 26, and thus an electroconductive pressure-sensitive adhesive tape main body 23 can be produced. A plurality of the terminals 26 are formed usually at suitable intervals, for example, as the pattern of distributed points shown in Fig. 1. The electroconductive pressure-sensitive adhesive tape main body 23 may employ an auxiliary sheet, an auxiliary tape, or the like described in Japanese Unexamined Patent Application No. 8-185714, Japanese Unexamined Patent Application No. 10-292155, Japanese Unexamined Patent Application No. 11-302615, and the like in order to provide excellent moisture resistance or stable electrical conductivity.

As the method for forming the terminal in the electroconductive pressure-sensitive adhesive tape main body, in addition to the method by the draw forming and pressing, a method of embossing from the metal foil side may be used. Such method can produce an electroconductive pressure-sensitive adhesive tape main body 33 in which terminals 36 that penetrate a pressure-sensitive adhesive layer 32 are formed on a metal foil 31 as shown in Fig. 3.

[Separator]

In the electroconductive pressure-sensitive adhesive tape of the present invention, a separator (release liner) is provided on the surface (adhesive face) of the pressure-sensitive adhesive layer in the electroconductive pressure-sensitive adhesive tape main body for the protection of the surface of the pressure-sensitive adhesive layer and the like. Such separator is not specifically limited as long as the elongation in the longitudinal direction is within a particular range described later, but examples of the separator include a base having a release layer, a low adhesive base including a fluorine polymer, and a low adhesive base including a non-polar polymer, Examples of the base having a release layer include plastic film and paper each surface-treated with a release coating agent such as a silicone agent, a long-chain alkyl agent, a fluorine agent, and molybdenum sulfide. Examples of the fluorine polymer include polytetrafluoroethylenes, polychlorotrifluoroethylenes, polyvinyl fluorides, polyvinylidene fluorides, tetrafluoroethylene-hexafluoropropylene copolymers, and chlorofluoroethylene-vinylidene fluoride copolymers. Furthermore, examples of the non-polar polymer include olefinic resins (for example, polyethylenes and polypropylenes). Among them, from the viewpoint of preventing separator lifting, a separator including the olefinic resin (olefinic separator) is preferred.

The olefinic separator is not specifically limited as long as the separator employs an olefinic film or sheet (polyolefinic film or sheet) including the olefinic resin as the essential component. The separator may include only the olefinic film or sheet, and may be a laminate including the olefinic film or sheet and a resin film or sheet including other resins such as a polyester resin or a paper base. The olefinic separator may include a release coating layer that is formed on the surface of the olefinic film or sheet or the laminate. Furthermore, the olefinic film or sheet may have a single layer structure or a stacked structure. Among them, the olefinic separator preferably has the release coating layer that is formed on the surface of the olefinic film or sheet.

The release coating agent included in the release coating layer is not specifically limited, and can be suitably selected to be used from known or common release coating agents (for example, a silicone release coating agent, a fluorine release coating agent, a long-chain alkyl release coating agent, a fatty acid amide release coating agent, a molybdenum sulfide release coating agent, and silica powder). Among them, the release coating agent is preferably the silicone release coating agent. The release coating agents may be used alone or in combination of two or more of them.

The olefinic separator is preferably used as the separator because it does not have excessively high rigidity in comparison with the polyester separator (for example, a separator including a polyester resin alone) and has moderate flexibility, and thus the elongation in the longitudinal direction is readily controlled within a particular range described later.

The olefinic resin (polyolefinic resin) constituting the olefinic separator is not specifically limited. Examples of the olefinic resin include polyethylenes (for example, a low-density polyethylene, a linear low-density polyethylene, a metallocene-catalyzed polyethylene, a medium-density polyethylene, and a high-density polyethylene), polypropylenes, polybutenes [for example, a poly(1-butene)], a poly(4-methyl-1-pentene)s, an $\alpha$-olefin copolymer [for example, a copolymer of ethylene and an $\alpha$-olefin having 3 to 10 carbon atoms (also referred to as an "ethylene-$\alpha$-olefin copolymer")], and copolymers of propylene and an $\alpha$-olefin having 4 to 10 carbon atoms (also referred to as "propylene-$\alpha$-olefin copolymers"). Examples of the olefinic resin further include copolymers of ethylene and a component other than $\alpha$-olefins [for example, ethylene-unsaturated carboxylic acid copolymers such as an ethylene-acrylic acid copolymer (EAA) and an ethylene-methacrylic acid copolymer (EMAA); ionomers; ethylene-(meth)acrylate copolymers such as an ethylene-methyl acrylate copolymer (EMA), an ethylene-ethyl acrylate copolymer (EEA), and an ethylene-methyl methacrylate copolymer (EMMA); ethylene-vinyl acetate copolymers (EVA); and ethylene-vinyl alcohol copolymers]. The olefinic resins may be used alone or in combination of two or more of them.

The ethylene-$\alpha$-olefin copolymer (the copolymer of ethylene and an $\alpha$-olefin having 3 to 10 carbon atoms) can suitably employ, as the $\alpha$-olefin having 3 to 10 carbon atoms, at least one $\alpha$-olefin (comonomer) selected from the group consisting of propylene, 1-butene, 1-hexene, 4-methyl-1-pentene, and 1-octene. Accordingly, examples of the ethylene-$\alpha$-olefin copolymer include an ethylene-propylene copolymer and an ethylene-(1-butene) copolymer. Furthermore, the propylene-$\alpha$-olefin copolymer (the copolymer of propylene and an $\alpha$-olefin having 4 to 10 carbon atoms) can suitably employ, as the $\alpha$-olefin having 4 to 10 carbon atoms, at least one $\alpha$-olefin (comonomer) selected from the group consisting of 1-butene, 1-hexene, 4-methyl-1-pentene and 1-octene. Accordingly, examples of the propylene-$\alpha$-olefin copolymer include a propylene-(1-butene) copolymer.

The olefinic resin is preferably a polyethylene, a polypropylene, and an ethylene-$\alpha$-olefin copolymer. Among them, the polyethylene (in particular, a linear low-density polyethylene; a low-density polyethylene, a high-density polyethylene, or any mixtures of them) and the polypropylene can be preferably used. Accordingly, the olefinic separator can preferably employ a separator that includes a polyethylene film or sheet containing the polyethylene as the essential component (a polyethylene film or sheet; specifically, a linear low-density polyethylene film or sheet, a low-density polyethylene film or sheet, a high-density polyethylene film or sheet, or a film or sheet including any mixture of them) and a polypropylene film or sheet containing the polypropylene as the essential component (a polypropylene film or sheet).

The olefinic resin can be easily obtained on the basis of a known procedure by properly selecting the conditions of the polymerization reaction, the purification and separation after the reaction, and the like.

A commercial product may be used as the olefinic film or sheet (in particular, the polyethylene film or sheet and the polypropylene film or sheet).

Particularly preferred examples of the specific constitution of the separator constituting the electroconductive pressure-sensitive adhesive tape of the present invention include the following constitutions (1) to (4) from the viewpoints of controlling the elongation of the separator in the longitudinal direction and preventing the separator lifting. However, the constitution is not limited to them.

(1) A separator including a polyethylene film or sheet alone containing a polyethylene as the essential component (a polyolefinic separator).
(2) A separator including a release coating layer containing a silicone release coating agent on at least one surface of the polyethylene film or sheet in (1) (a polyolefinic separator).

(3) A separator including a polypropylene film or sheet alone containing a polypropylene as the essential component (a polyolefinic separator).

(4) A separator including a release coating layer containing a silicone release coating agent on at least one surface of the polypropylene film or sheet in (2) (a polyolefinic separator).

The thickness of the separator is preferably 15 to 200 $\mu$m, and more preferably 20 to 150 $\mu$m, When the thickness is more than 200 $\mu$m, the rigidity is increased to reduce the following performance to the surface of the pressure-sensitive adhesive layer side, and thus the separator lifting may be readily caused. Furthermore, when the tape has a long length, the roll may have a large diameter to become bulky. In contrast, when the thickness is less than 15 $\mu$m, the workability may be reduced when the separator is released.

When the release coating layer is formed on the separator, the thickness of the release coating layer (for example, the release coating layer formed on the surface of the olefinic film or sheet) is preferably 0.3 to 10 $\mu$m, and more preferably 0.5 to 8 $\mu$m. When the thickness is more than 10 $\mu$m, the release strength becomes excessively small, and thus the separator lifting may be readily caused. Furthermore, the cost may be increased. In contrast, when the thickness is less than 0.3 $\mu$m, the release strength becomes excessively high, and thus troubles may be caused, for example, the metal foil is broken when the separator is released.

The elongation of the separator in the longitudinal direction is 600% or more (for example, 600 to 5000%), more preferably 650 to 4000%, and even more preferably 750 to 3000%. When the elongation is less than 600%, the separator lifting is readily caused and the protective properties are poor. In particular, when the electroconductive pressure-sensitive adhesive tape is wound or has a long length, the separator lifting is readily caused and the handling becomes difficult.

The elongation in the longitudinal direction can be measured as a tensile elongation at break in tensile test. Specifically, under conditions at 23°C and 50% RH, using a tensile tester, a separator that is cut into a width of 5 mm and a length of 30 mm (the longitudinal direction of the separator) is pulled at a gauge length (initial length) of 10 mm and a tensile speed of 50 mm/min in the length direction (the longitudinal direction of the separator), and the gauge length when the separator is broken is measured to determine the elongation. More specifically, the elongation can be determined by the test procedure in "(1) Elongation" in (Evaluation) described later.

When the separator has an elongation of 600% or more in the longitudinal direction, the separator has excellent following performance with respect to the convex-concave shape caused by the terminals present on the surface of the pressure-sensitive adhesive layer side in the electroconductive pressure-sensitive adhesive tape main body, thus the separator has sufficient adhesive power to the surface of the pressure-sensitive adhesive layer, and the separator lifting is not caused. Therefore, in particular, even when the electroconductive pressure-sensitive adhesive tape is wound into a roll shape or has a long length, the separator lifting is not caused and the handling becomes easy.

In the electroconductive pressure-sensitive adhesive tape of the present invention, the release force of the separator is preferably 30 to 1000 mN/50 mm, and more preferably 50 to 700 mN/50 mm, in a 180° release test with respect to the surface of the pressure-sensitive adhesive layer (the surface of the pressure-sensitive adhesive layer side). When the release force is more than 1000 mN/50 mm, the releasability may be poor. When the release force is less than 30 mN/50 mm, the protective properties may be poor and the separator lifting may be readily caused. The release force can be measured as 180° releasing adhesive power (at a tensile speed of 300 mm/min) of the separator with respect to the surface of the pressure-sensitive adhesive layer in the electroconductive pressure-sensitive adhesive tape main body, in accordance with the 180° release test described in Japanese Industrial Standard Z 0237. More specifically, the release force can be measured by the procedure in "(3) Release Force of Separator" in (Evaluation) described later.

The separator can be produced by a known or common sheet forming technique such as a melt film forming method (for example, a T-slot die method and an inflation method) and a solution film forming method. Among them, the melt film forming method is preferred from the viewpoint of the productivity. Furthermore, a commercial product may be used as the separator (in particular, the olefinic separator).

[Examples]

Hereinafter, the present invention will be described in more detail on the basis of the examples, but the present invention is not intended to be limited to the examples.

Preparation Example of Acrylic Polymer

To a separable flask, 100 parts by weight of n-butyl acrylate (BA) and 5 parts by weight of acrylic acid (AA) as the monomer components, 0.2 part by weight of 2,2'-azobisisobutyronitrile as the polymerization initiator, and 27 parts by weight of toluene as the polymerization solvent were added, and the whole was stirred for 1 hour while introducing nitrogen gas. After oxygen in the polymerization system is removed in this manner, the temperature was increased to 63°C and the reaction was carried out for 10 hours. Then, toluene was added to adjust the concentration to prepare an acrylic polymer solution having a solid concentration of 30% by weight. In the acrylic polymer solution, the acrylic polymer had a weight average molecular weight of 550,000.

Preparation Example of Pressure-Sensitive Adhesive Composition Solution

To the acrylic polymer solution obtained above, 20 parts by weight of terpene phenol resin (supplied by SUMITOMO BAKELITE Co., Ltd. under the trade name "SUMILITERESIN PR-12603") as the tackifier resin and 2.82 parts by weight of isocyanate crosslinking agent (supplied by NIPPON POLYURETHANE INDUSTRY CO., LTD. under the trade name "CORONATE L") were added based on 100 parts by weight of acrylic polymer, and the whole was mixed to prepare a pressure-sensitive adhesive composition solution.

Example 1

One side of a tough pitch copper foil having a thickness of 35 $\mu$m was cast-coated with the pressure-sensitive adhesive composition solution obtained above so as to have a thickness of 40 $\mu$m after drying, and dried at 110°C for 3 minutes to prepare a laminate having the constitution of "metal foil/pressure-sensitive adhesive layer". Then, each of the intervals a and b in Fig. 1 was set as 5 mm, the laminate was molded using a drawing mold having a punch external diameter of 0.425 mm and a die inner diameter of 0.5 mm and a press to prepare a electroconductive pressure-sensitive adhesive tape main body having the terminals in the shape shown in Fig. 2.
Furthermore, on the adhesive face of the electroconductive pressure-sensitive adhesive tape main body, a polyolefinic separator (a thickness of 81 $\mu$m) that included a polyethylene film (a thickness of 80 $\mu$m) as the base and a silicone release coating layer having a thickness of 1 $\mu$m on one side of the base was laminated as the separator to prepare an electroconductive pressure-sensitive adhesive tape.

Example 2

An electroconductive pressure-sensitive adhesive tape was obtained in the same manner as in Example 1 except for using, as the separator, a polyolefinic separator (a thickness of 76 $\mu$m) that included a polyethylene film (a thickness of 75 $\mu$m) as the base and a silicone release coating layer having a thickness of 1 $\mu$m on one side of the base.

Example 3

An electroconductive pressure-sensitive adhesive tape was obtained in the same manner as in Example 1 except for using, as the separator, a polyolefinic separator (a thickness of 61 $\mu$m) that included a polyethylene film (a thickness of 60 $\mu$m) as the base and a silicone release coating layer having a thickness of 1 $\mu$m on one side of the base.

Example 4

An electroconductive pressure-sensitive adhesive tape was obtained in the same manner as in Example 1 except for using, as the separator, a polyolefinic separator (a thickness of 41 $\mu$m) that included a polypropylene film (a thickness of 40 $\mu$m) as the base and a silicone release coating layer having a thickness of 1 $\mu$m on one side of the base.

Example 5

An electroconductive pressure-sensitive adhesive tape was obtained in the same manner as in Example 1 except for using, as the separator, a polyolefinic separator (a thickness of 41.5 $\mu$m) that included a polypropylene film (a thickness of 40 $\mu$m) as the base and a silicone release coating layer having a thickness of 1.5 $\mu$m on one side of the base.

Comparative Example 1

An electroconductive pressure-sensitive adhesive tape was obtained in the same manner as in Example 1 except for using, as the separator, a polyester separator (a thickness of 26 $\mu$m) that included a polyethylene terephthalate (PET) film (a thickness of 25 $\mu$m) as the base and a silicone release coating layer having a thickness of 1$\mu$m on one side of the base.

(Evaluation)

The following evaluations were carried out on the electroconductive pressure-sensitive adhesive tapes obtained in Examples and Comparative Example and the separators used in Examples and Comparative Example. The results are shown in Table 1.

(1) Elongation

Each separator used in Examples and Comparative Example was cut into a width of 5 mm and a length of 30 mm (in the longitudinal direction of the separator) to be used as the test sample. Using a tensile tester, under the condition at 23°C and 50% RH, the test sample was pulled at a gauge length (initial length) of 10 mm and a tensile speed of 50 mm/min in the length direction. The gauge length (mm) when the test sample was broken was measured, and the elongation (%) in the longitudinal direction of the separator was calculated by the following formula.

$$\text{Elongation (\%)} = \{(L - L_0) \times 100\}/L_0$$

(In the formula, $L_0$ represents the gauge length (initial length) (mm) of the test sample, and L represents the gauge length (mm) when the test sample is broken)
The number (n) of the tests was three times, and the mean value was calculated.

(2) Workability of Rolled Product (Separator Lifting)

Each of the electroconductive pressure-sensitive adhesive tapes (a width of 25 mm and a length of 10 m) obtained in Examples and Comparative Example was wound around a winding core having a diameter of 30 mm to prepare a rolled product of the electroconductive pressure-sensitive adhesive tape. The separator lifting on the rolled product was visually checked to evaluate the workability of the rolled product. In the evaluation, the rolled product without the separator lifting is represented as ○ (no lifting), and that with the separator lifting is represented as × (with lifting).

(3) Release Force of Separator

Each of the electroconductive pressure-sensitive adhesive tapes obtained in Examples and Comparative Example was cut into a width of 50 mm and a length of 150 mm to prepare a tape piece, and the tape piece was used as the sample for measuring the release force.
Using a tensile tester, the 180° release test was carried out in accordance with Japanese Industrial Standard Z 0237 to measure the 180° releasing adhesive power (N/50 mm) of the separator, and the measured value was regarded as "the release force of the separator". The measurement was carried out in an atmosphere at 23°C and 50% RH under conditions at a release angle of 180° and a tensile speed of 300 mm/min. The number (n) of the tests was three times, and the mean value was calculated.

[Table 1]

(Table 1)

| | | Example 1 | Example 2 | Example 3 | Example 4 | Example 5 | Comparative Example 1 |
|---|---|---|---|---|---|---|---|
| Separator | Separator base | PE film | PE film | PE film | PP film | PP film | PET film |
| | Thickness ($\mu$m) | 81 | 76 | 61 | 41 | 41.5 | 26 |
| | Elongation in longitudinal direction (%) | 2285 | 2565 | 901 | 1242 | 2321 | 514 |
| Electroconductive pressure-sensitive adhesive tape | Workability of rolled product | ○ | ○ | ○ | ○ | ○ | × |
| | Release force of separator (mN/50 mm) | 140 | 100 | 120 | 170 | 190 | 130 |

As apparent from the result in Table 1, the electroconductive pressure-sensitive adhesive tapes of the present invention (Examples) had no separator lifting and good workability of the rolled product. In contrast, when the separator had a low elongation (Comparative Example), the workability of the rolled product was poor.

Each abbreviation in Table is as shown below.

PE: polyethylene
PP: polypropylene
PET: polyethylene terephthalate

[Reference Signs List]

11    Electroconductive pressure-sensitive adhesive tape
12    Terminal
21    Metal foil
22    Pressure-sensitive adhesive layer
23    Electroconductive pressure-sensitive adhesive tape main body
24    Separator
25    Electroconductive pressure-sensitive adhesive tape
26    Terminal
31    Metal foil
32    Pressure-sensitive adhesive layer
33    Electroconductive pressure-sensitive adhesive tape main body
34    Separator
35    Electroconductive pressure-sensitive adhesive tape
36    Terminal

**Claims**

1.  An electroconductive pressure-sensitive adhesive tape comprising:

an electroconductive pressure-sensitive adhesive tape main body including a metal foil, a pressure-sensitive adhesive layer on one side of the metal foil, and a terminal formed on the metal foil and penetrating the pressure-sensitive adhesive layer; and

a separator provided on a surface of the pressure-sensitive adhesive layer and having an elongation of 600% or more in a longitudinal direction of the separator determined according to the method defined in the description.

2. The electroconductive pressure-sensitive adhesive tape according to claim 1, wherein the separator has a release force of 30 to 1000 mN/50 mm in a 180° release test determined according to the method defined in the description.

3. The electroconductive pressure-sensitive adhesive tape according to claim 1 or 2, wherein the separator has a thickness of 15 to 200 $\mu$m.

**Patentansprüche**

1. Elektrisch leitendes Haftklebeband, umfassend:

einen Hauptteil eines elektrisch leitenden Haftklebebands, der eine Metallfolie, eine Haftklebeschicht auf einer Seite der Metallfolie und einen Anschluss, der auf der Metallfolie gebildet ist und die Haftklebeschicht durchdringt, einschließt; und

eine Trennfolienabdeckung, die auf einer Oberfläche der Haftklebeschicht bereitgestellt ist und eine Dehnung von 600 % oder mehr in einer Längsrichtung der Trennfolienabdeckung aufweist, bestimmt gemäß dem in der Beschreibung definierten Verfahren.

2. Elektrisch leitendes Haftklebeband nach Anspruch 1, wobei die Trennfolienabdeckung eine Ablösekraft von 30 bis 1000 mN/50 mm in einem 180°-Ablösetest aufweist, bestimmt gemäß dem in der Beschreibung definierten Verfahren.

3. Elektrisch leitendes Haftklebeband nach Anspruch 1 oder 2, wobei die Trennfolienabdeckung eine Dicke von 15 bis 200 $\mu$m aufweist.

**Revendications**

1. Bande adhésive électro conductrice sensible à la pression comprenant :

un corps principal de bande adhésive électro conductrice sensible à la pression incluant une feuille métallique, une couche adhésive sensible à la pression sur un côté de la feuille métallique et une borne formée sur la feuille métallique et pénétrant dans la couche adhésive sensible à la pression, et

un séparateur ménagé sur une surface de la couche adhésive sensible à la pression et présentant une élongation de 600 % ou plus dans la direction longitudinale du séparateur déterminé en fonction du procédé défini dans la description.

2. Bande adhésive électro conductrice sensible à la pression selon la revendication 1 dans laquelle le séparateur présente une force de relâchement de 30 à 1000 mN / 50 mm dans un test de relâchement sur 180 ° déterminé en fonction du procédé défini dans la description.

3. Bande adhésive électro conductrice sensible à la pression selon la revendication 1 ou 2 dans laquelle le séparateur présente une épaisseur de 15 à 200 $\mu$m.

[Fig. 1]

Longitudinal direction

[Fig. 2]

[Fig. 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8185714 A
- JP 10292155 A
- JP 11302615 A
- JP 63046980 A